# EUROPÄISCHE PATENTSCHRIFT

(11) **EP 2 508 393 B1**
(45) Veröffentlichungstag und Bekanntmachung des Hinweises auf die Patenterteilung: **30.09.2015**
(21) Anmeldenummer: 12160745.1
(22) Anmeldetag: 22.03.2012
(51) Int. Cl.: B60R 11/04

(54) **Vorrichtung mit einer Kameraeinheit**
Device with a camera unit
Dispositif doté d'une unité de caméra

(30) Priorität: 05.04.2011 DE 102011001825
(43) Veröffentlichungstag der Anmeldung: 10.10.2012
(73) Patentinhaber: Huf Hülsbeck & Fürst GmbH & Co. KG, 42551 Velbert (DE)
(72) Erfinder: Barthel, Joachim, 45329 Essen (DE); Buschmann, Gerd, 42553 Velbert (DE)
(74) Vertreter: Bals, Rüdiger

(56) Entgegenhaltungen:
- DE-A1-102006 023 103
- DE-A1-102006 048 371

## Beschreibung

Die Erfindung betrifft eine Vorrichtung, insbesondere für einen Heckbereich eines Fahrzeuges, mit einer Kameraeinheit, die zur Bilderfassung des Außenbereichs des Fahrzeugs dient. Dabei ist die Kameraeinheit, insbesondere in einem Gehäuse mittels eines Trägerelements, am Fahrzeug geschützt angeordnet. Üblicherweise wird eine derartige Vorrichtung in der Heckklappe oder im Bereich über oder unter dem Kraftfahrzeugnummernschild oder im Bereich der Stoßstange des Fahrzeuges vorgesehen. Damit die Bilderfassung der Kameraeinheit möglich ist und trotzdem die Kameraeinheit geschützt in der Vorrichtung untergebracht ist, ist ein bewegliches Verschlusselement zum Verschließen einer Gehäuseöffnung vorhanden, welches durch eine Antriebseinheit in zumindest zwei Endstellungen (I, II), nämlich eine Schließstellung (I) und eine Offenstellung (II), bewegbar ist. Das Dokument DE 10 2006 048 371 A1 offenbart eine Vorrichtung mit einer Kameraeinheit zur Bilderfassung eines Außenbereiches eines Fahrzeugs, wobei an dem Kameragehäuse ein Verschlusselement zum Verschließen der Gehäuseöffnung angeordnet ist.

Des Weiteren ist die vorliegende Erfindung auch auf ein Verfahren zum Betrieb einer Vorrichtung, insbesondere für einen Heckbereich eines Fahrzeugs, mit einer Kameraeinheit gemäß Anspruch 14 gerichtet.

Aus dem Stand der Technik sind diverse Vorrichtungen bekannt, die dazu dienen, eine Kameraeinheit, insbesondere im Heckbereich eines Fahrzeuges, anzuordnen, so dass diese eine Bilderfassung von dem Bereich hinter dem Fahrzeug ermöglicht. Das erhaltene Bild kann dann im Fahrzeug für den Fahrer angezeigt werden, um die Rückwärtsfahrt zu erleichtern. Um eine Verschmutzung der Kamera zu verhindern, ist diese hinter einem Verschlusselement angeordnet, welches von einer Schließstellung in eine Offenstellung überführbar ist, um die Bilderfassung der Kameraeinheit zu ermöglichen. Aus der Druckschrift DE 103 51 363 A1 ist z. B. eine derartige Vorrichtung mit einer Kameraeinheit bekannt. Ferner sind an modernen Fahrzeugen diverse Bedieneinheiten angeordnet, um z. B. die Heckklappe eines Fahrzeugs öffnen zu können. Häufig wird die Vorrichtung mit der Kameraeinheit gesondert von der Betätigungseinheit für die Heckklappe geliefert, so dass zwei unterschiedliche Bauteile am Fahrzeug montiert werden müssen. Aus dem Stand der Technik ist es auch bekannt, die Bedieneinheit mit der Kameraeinheit in einer gemeinsamen Vorrichtung am Fahrzeug anzuordnen, um somit möglichst wenig separate Bauteile zu verwenden. Dabei wird in der Regel die Bedieneinheit seitlich neben, über oder unter der Kameraeinheit am Fahrzeug montiert. Folglich benötigt eine derartige kombinierte Vorrichtung einen entsprechend großen Bauraum.

Es ist somit Aufgabe der vorliegenden Erfindung, eine derartige Vorrichtung mit einer Kameraeinheit bereit zu stellen, die über zusätzliche Anwendungsmöglichkeiten verfügt, wie z. B. einer Bedieneinheit für ein Heckklappenschloss eines Fahrzeuges, und trotzdem über einen sehr kompakten Aufbau für einen knappen Bauraum ausgestaltet ist. Ferner ist es Aufgabe der vorliegenden Erfindung, auch ein entsprechendes Verfahren zum Betrieb einer derartigen Vorrichtung bereit zu stellen, wodurch die Anwendungsmöglichkeiten der Vorrichtung vergrößert werden.

Die vorliegende Aufgabe wird durch eine Vorrichtung mit einer Kameraeinheit und den weiteren Merkmalen aus dem Patentanspruch 1 gelöst.

Die Erfindung ist ferner in diversen Ausgestaltungen durch die abhängigen Unteransprüche und die nachfolgende Beschreibung erläutert. Dabei gelten Merkmale und Details, die im Zusammenhang mit der erfindungsgemäßen Vorrichtung offenbart werden, auch im Zusammenhang mit dem erfindungsgemäßen Verfahren und umgekehrt, so dass bezüglich der Offenbarung zu den einzelnen Erfindungsaspekten stets wechselseitig Bezug genommen wird.

Bei der erfindungsgemäßen Vorrichtung ist es vorgesehen, dass das Verschlusselement gleichzeitig dazu dient, ein elektrisches Schaltelement zu betätigen, um ein fahrzeuginternes Steuersignal zu erzeugen. Hierbei erfasst das elektrische Schaltelement insbesondere in der Schließstellung (I) des Verschlusselements eine von außen wirkende Kraft messtechnisch als Steuersignal. Bei dem Begriff der von außen wirkenden Kraft wird darunter verstanden, dass die Kraft vom Außenbereich des Fahrzeugs auf die Vorrichtung einwirkt und nicht vom Fahrzeuginneren. Außerdem kann es sich bei der Kraft um eine Zug- oder eine Druckkraft handeln. Außerdem sei an dieser Stelle klargestellt, dass die mechanische Kraftübertragung von dem Verschlusselement auf das elektrische Schaltelement nicht nur direkt, sondern auch indirekt stattfinden kann. Folglich können zwischen dem Verschlusselement und dem elektrischen Schaltelement weitere Elemente vorgesehen sein, die zur Kraftübertragung dienen. So kann z. B. am Schaltelement auch ein Stößel angeordnet sein, der eine Relativbewegung von einem Bauteil der Vorrichtung durch die einwirkende Kraft erzeugt und diese an das Schaltelement weitergibt.

Des Weiteren kann es erfindungsgemäß vorgesehen sein, dass das Verschlusselement gleichzeitig ein Betätigungselement für eine Betätigung eines Heckklappenschlosses ist. Folglich handelt es sich bei dem Verschlusselement um ein Kombi-Bauteil, so dass es gleichzeitig als Betätigungselement dient. Zweckmäßigerweise weist hierzu das Verschlusselement einen verformbaren Bereich auf, um die von außen wirkende Kraft möglichst verlustfrei an das elektrische Schaltelement zu übertragen. Dabei kann das elektrische Schaltelement direkt hinter dem verformbaren Bereich an einer Innenseite vom Verschlusselement angeordnet sein. Auch hierbei ist es denkbar, dass ein Stößel zwischen dem Verschlusselement und dem elektrischen Schaltelement zum Einsatz kommt, um die von außen wirkende Kraft auf das Schaltelement zu übertragen.

Bei dem elektrischen Schaltelement kann es sich um ein beliebiges Sensorelement handeln, welches ein analoges oder digitales Steuersignal erzeugen kann. Ferner kann das Schaltelement als Drucksensor ausgestaltet sein, wodurch aber auch Zugkräfte erfassbar sind. Als Drucksensor kommt hierbei z. B. ein Piezo-Sensorelement in Frage. Ferner kann auch die von der außen wirkenden Kraft verursachte Relativbewegung in der Vorrichtung durch ein optisches Sensorelement erfasst werden und zu einem Steuersignal umgewandelt werden.

Des Weiteren kann es erfindungsgemäß vorgesehen sein, dass die Gehäuseöffnung zumindest für die Kameraeinheit zur Bilderfassung des Außenbereichs eines Fahrzeugs dient, wobei insbesondere ein geneigter Bilderfassungsbereich für die Kamera vorgesehen ist. Da das von der Kameraeinheit erzeugte Bild auf einem Monitor im Fahrzeuginneren dargestellt werden soll, empfiehlt es sich, dass auf dem Bild ein Bezugspunkt vom Fahrzeug erkennbar ist. Hierbei kann es sich z. B. um die Stoßstange oder aber die Anhängerkupplung oder dergleichen handeln. Auch sei erwähnt, dass die vorliegende erfindungsgemäße Vorrichtung nicht nur für einen Heckbereich eines Fahrzeugs geeignet ist, sondern auch einen Frontbereich oder Seitenbereich des Fahrzeugs bildtechnisch erfassen kann. Zu diesem Zweck kann die erfindungsgemäße Vorrichtung mit der Kameraeinheit im Schwellerbereich oder im Stoßstangenbereich des Fahrzeugs angeordnet sein. Selbstverständlich ist es dabei auch denkbar, dass die Vorrichtung direkt am Türschweller oder in einem Stoßfänger angeordnet ist. Des Weiteren kann es vorgesehen sein, dass mehr als eine erfindungsgemäße Vorrichtung ggf. auch in einer unterschiedlichen Ausgestaltung am Fahrzeug angeordnet ist, um somit eine Vogelperspektive des Fahrzeugs mit seinem angrenzenden Bereichen auf dem Monitor im Fahrzeug darstellen zu können. Auch sollte der Bilderfassungsbereich den normalen Horizont der Fahrzeugumgebung mit erfassen, wodurch sich ein überschaubares Bild, welches von der Kameraeinheit erfasst wird, herstellen lässt.

Des Weiteren kann es erfindungsgemäß vorgesehen sein, dass die Kameraeinheit bewegbar an einem Schlitten an dem Trägerelement, insbesondere in dem Gehäuse, angeordnet ist. Hierbei kann der Schlitten über eine Linearführung am Trägerteil gelagert sein. Vorzugsweise ist die Linearführung am Gehäuse als lineare Nut in der Gehäuseinnenwand vorgesehen. Am Schlitten ist zumindest ein herausragender Führungsnocken vorgesehen, der formschlüssig in der Führungsnut geführt ist. Der Führungsnocken kann quaderförmig mit abgerundeten Ecken ausgestaltet sein. Ebenfalls ist es denkbar, dass mindestens an jeder Seite des Schlittens zwei Führungsnocken angeordnet sind, um somit eine verspannungsfreie Führung des Schlittens im Kameragehäuse zu ermöglichen. Zur Montage des Führungsschlittens im Gehäuse, kann das Gehäuse zweiteilig aufgebaut sein, wobei eine mittige Trennnaht zwischen den Gehäusehälften vorgesehen sein kann. Weiterhin ist es erfindungsgemäß denkbar, dass die Kameraeinheit über ein Kippelement am Schlitten gelagert ist. Folglich ist die Kameraeinheit nicht direkt am Schlitten, sondern über das Kippelement am Schlitten indirekt gelagert. Das Kippelement selbst kann eine feste Drehachse zum Schlitten aufweisen, so dass das Kippelement zum Schlitten einen festen Drehpunkt aufweist. Die Kippbewegung des Kippelements kann durch eine Kulissenführung erreicht werden, die vergleichbar zur bereits erwähnten Linearführung am Trägerelement, insbesondere am Gehäuse, ausgestaltet ist. Auch diese Kulissenführung kann durch eine Führungsnut ausgestaltet sein, die sich seitlich an einer Innenwand des Gehäuses befindet. Um auch ein Verklemmen des Kippelements bei einer Verstellung der Kameraeinheit in der Vorrichtung zu verhindern, können links- und rechtsseitig Kulissenführungen vorgesehen sein, die insbesondere über entsprechende Führungsnuten in den Gehäuseseiteninnenwänden angeordnet sind. Ebenfalls ist es erfindungsgemäß denkbar, dass die Kulissenführung für das Kippelement oberhalb zur Linearführung des Schlittens angeordnet ist. Hierbei kann die Kulissenführung zumindest teilweise parallel zur Linearführung verlaufen. Zusätzlich kann ein Federelement zwischen dem Kippelement und dem Schlitten angeordnet sein, um das Führungsspiel der Kameraeinheit in der Vorrichtung zu minimieren. Zusätzlich kann die Feder auch für einen Toleranzausgleich bei der Kulissenführung und/oder der Linearführung dienen.

Im Rahmen der Erfindung kann es vorgesehen sein, dass das Verschlusselement für die Kameraeinheit am Schlitten befestigt ist. Hierbei kann das Verschlusselement sogar einteilig mit dem Schlitten ausgestaltet sein und aus einem Spritzgußteil hergestellt worden sein. In diesem Fall reduziert sich weiterhin die Zahl der verwendeten Bauteile für die erfindungsgemäße Vorrichtung. Ebenfalls ist es denkbar, dass das Verschlusselement über eine Rastverbindung mit dem Schlitten verbunden ist. Bei der Rastverbindung kann es sich um eine reversibel lösbare Verbindung handeln, so dass sich das Verschlusselement zerstörungsfrei von dem Schlitten trennen lässt, wodurch sich eine einfachere Reparatur oder Wartung der erfindungsgemäßen Vorrichtung realisieren lässt. Ebenfalls ist es denkbar, dass die Rastverbindung zwischen dem Verschlusselement und dem Schlitten irreversibel (nicht reversibel) lösbar ausgestaltet ist, um möglichst Manipulationen von außen an der erfindungsgemäßen Vorrichtung weitestgehend ausschließen zu gehen. Auch sind Rastverbindungen zwischen dem Verschlusselement und dem Schlitten denkbar, die nur reversibel lösbar ausgestaltet sind, wenn sich das Verschlusselement in seiner Offenstellung (II) befindet, da hier die Rastverbindung durch ein Werkzeug lösbar ist.

Bei der vorliegenden Erfindung ist es ferner vorgesehen, dass das Verschlusselement zumindest teilweise doppelwandig ausgestaltet ist, wobei das elektrische Schaltelement eine Relativbewegung zwischen den beiden Wänden des Verschlusselements durch eine von außen wirkende Kraft auf das Verschlusselement messtechnisch als Steuersignal erfasst. Hierbei ist das Schaltelement zwischen den beiden Wänden des Verschlusselements angeordnet, um somit direkt die von außen wirkende Kraft auf die äußere Wandung des doppelwandigen Verschlusselements messtechnisch zu erfassen. Auch ist es denkbar, dass nur ein Stößel zwischen dem Verschlusselement, insbesondere der äußeren Wandung des Verschlusselements, und dem Schaltelement, die Relativbewegung auf das Schaltelement überträgt. Das doppelwandige Verschlusselement kann einteilig ausgestaltet sein, wozu es vorzugsweise als Kunststoff-Spritzgussteil ausgestaltet ist. Es ist denkbar, dass das Verschlusselement materialeinheitlich und einteilig ausgestaltet ist.

Des Weiteren kann im Rahmen der Erfindung vorgesehen sein, dass das Verschtusselement, welches gleichzeitig als Bedienelement dient, zweiteilig aufgebaut ist und ein Betätigungselement und ein Basisteil aufweist. Hierbei kann das Basisteil die Gehäuseöffnung in der Schließstellung (I) abdichtend verschließen, wohingegen das Betätigungsteil zur Betätigung des elektrischen Schaltelements dient. Die Anordnung des Schaltelements kann zwischen dem Betätigungsteil und dem Basisteil vorgesehen sein. Ebenfalls kann, wie bei dem doppelwandigen Verschlusselement, das Schaltelement über einen Stößel mit dem Betätigungsteil mechanisch zusammenwirken. Der Zwischenraum zwischen dem Betätigungsteil und dem Basisteil kann als abgedichteter Raum vorgesehen sein. Zweckmäßigerweise kann zwischen dem Betätigungsteil und dem Basisteil eine wasserdichte Membrane angeordnet sein, wodurch der Zwischenraum entsprechend abgedichtet ist.

Bei der Erfindung kann es ferner vorgesehen sein, dass die Antriebseinheit außen am Gehäuse, d. h. an der Gehäuseaußenwand, der Kameraeinheit angeordnet ist. Hierzu kann die Antriebseinheit über Rastmittel mit einer Gehäuseaußenwand verbunden sein, wobei die Rastmittel auch das von der Antriebseinheit erzeugte Drehmoment abfangen müssen. Zu diesem Zweck können zusätzliche Stützelemente an der Gehäuseaußenwand vorgesehen sein, um die Rastmittel mechanisch zu unterstützen. Ferner kann nur eine Antriebswelle von der Antriebseinheit in das Gehäuse geführt werden, um somit einen Antrieb der Kameraeinheit zu gewährleisten. In dem Gehäuse wird dann die Drehbewegung der Antriebswelle in eine Längsbewegung der Kameraeinheit, insbesondere des Schlittens der Kameraeinheit umgewandelt. Zu diesem Zweck kann ein Koppelelement zwischen der Antriebswelle und dem Schlitten angeordnet sein. Das Koppelelement selbst weist dann einen festen Drehpunkt zur Antriebswelle auf und dient als ein oder zweiteiliger Drehhebel für den Schlitten, wodurch die Linearbewegung, insbesondere, mit der bereits erwähnten Linearführung, erhaltbar ist.

Ebenfalls kann es im Rahmen der Erfindung vorgesehen sein, dass das Verschlusselement in den Endstellungen (I, II) mechanisch verriegelt ist, um ein unrechtmäßiges Öffnen zu verhindern. Hierdurch kann die Diebstahlsicherung für die Kameraeinheit auf einfache Art und Weise deutlich erhöht werden, da nur durch eine Zerstörung der erfindungsgemäßen Vorrichtung eine Entnahme der Kameraeinheit realisierbar ist. Zweckmäßigerweise ist in diesem Fall das Verschlusselement von außen irreversibel mit der Vorrichtung, insbesondere dem Schlitten, mechanisch verbunden.

Zusätzlich ist es denkbar, dass das bereits erwähnte Koppelelement zwischen der Antriebswelle und dem Schlitten angeordnet ist, um somit eine mechanische Verriegelung des Verschlusselements in den Endstellungen (I, II) zu realisieren. Hierbei kann das Koppelelement, insbesondere ein erstes Koppelteil, in den Endstellungen (I, II) des Verschlusselements jeweils über seinen Totpunkt hinaus bewegt sein. Der Totpunkt des Koppelelements, insbesondere des ersten Koppelteils, liegt beim maximalen Verfahrweg des Schlittens vor. Nachdem das Koppelelement, insbesondere des ersten Koppelteils, über seinen Totpunkt hinaus bewegt wird, wird auch der Schlitten von seiner maximalen Verfahrposition wieder zurück verfahren. Da das Antriebselement selbsthemmend aufgebaut ist, lässt sich die Antriebswelle und das damit drehfest verbundene Koppelelement nicht weiter durch den Schlitten oder das Verschlusselement betätigen. Die Totpunkte des Koppelelements, insbesondere des ersten Koppelteils, liegen auf einer Linie, die sich mit dem Drehpunkt des Koppelelements bzw. der Antriebswelle schneiden. Das Koppelelement kann auch zweiteilig aufgebaut sein und aus zwei Köppelteilen bestehen.

Im Rahmen der Erfindung kann es ferner vorgesehen sein, dass die Kameraeinheit und/oder eine Elektronik der Vorrichtung mit einer elektrischen Leitung verbunden ist, die zur elektrischen Anbindung an die Fahrzeugelektronik dient. Hierbei kann die Leitung zumindest im Gehäuse der Kameraeinheit innerhalb einer Kabelkette geführt sein. Hierdurch lässt sich die elektrische Leitung exakt innerhalb des Gehäuses führen. Die Kabelkette kann selbsttragend aufgebaut sein, so dass sie keine zusätzliche Unterstützung benötigt. Außerdem kann so eine unberechtigte Manipulation oder Trerinung der Leitung verhindert werden, da die Kabelkette einen ausreichenden Schutz bietet. Zweckmäßigerweise läuft die Kabelkette zwischen einer oberen Gehäusedurchführung der Leitung und bis zum Schlitten bzw. Kippelement für die Kameraeinheit. Die Kabelkette kann im Bereich der Gehäuseöffnung für die Leitung fest mit dem Gehäuse verbunden sein.

Des Weiteren kann es erfindungsgemäß vorgesehen sein, dass das Schaltelement in der Schließstellung (I) des Verschlusselements mit der Antriebsmechanik, insbesondere dem Schlitte, dem Kippelement, dem Koppelelement und/oder der Antriebswelle für die Kameraeinheit mechanisch zusammenwirkt. Folglich wirkt das Schaltelement nicht direkt mit dem Verschlusselement zusammen, sondern mit der Antriebsmechanik. Hierzu kann ein mechanisches Spiel zwischen dem Verschlusselement in der Schließstellung (I) und einer Dichtung an der Gehäuseöffnung vorgesehen sein, wodurch eine kleine Relativbewegung des Verschlusselements in der Schließstellung (I) erzeugbar ist, ohne jedoch die Dichtwirkung in dieser Stellung zu beeinflussen. Auch das vorliegende Schaltelement kann in der Schließstellung (I) sowohl eine Zug- als auch eine Druckkraft auf das Verschlusselement messtechnisch erfassen. So kann z. B. ein Anschlagsmittel der Antriebsmechanik, welches nur in der Offenstellung (II) wirkt, genutzt werden, um das gewünschte Steuersignal durch die optische oder mechanische Veränderung zu erfassen. Selbstverständlich können auch mehrere Schaltelemente in der erfindungsgemäßen Vorrichtung vorgesehen sein, um somit einen sicheren Betrieb der Vorrichtung zu gewährleisten und möglichst Fehldetektionen auszuschließen, indem z. B. die Steuersignale der jeweiligen Schaltelemente miteinander verglichen werden und nur wenn identische Steuersignale vorliegen ein zentrales Steuersignal an die Fahrzeugelektronik weitergegeben wird.

Des Weiteren kann es erfindungsgemäß vorgesehen sein, dass das Steuersignal des elektrischen Schaltelements dazu dient, die Kameraeinheit in die Offenstellung (II) zu überführen. Die Kamera selbst befindet sich dann in ihrer Betriebsposition, die auch eine Reinigungsposition darstellen kann. Zusätzlich kann auch ein Freigabesignal vorliegen, so dass nur das Verschlusselement in seine Offenstellung (II) überführt wird und somit die Kameraeinheit in die Betriebsposition, wenn das Steuersignal vom Schaltelement vorliegt und das Freigabesignal vorliegt. Das Freigabesignal kann z. B. durch einen fahrzeuginternen Schalter ausgelöst werden, um somit einen Reinigungsvorgang der Kameraeinheit einleiten zu können.

Ebenfalls wird die zuvor genannte Aufgabe auch durch ein Verfahren zum Betrieb einer Vorrichtung mit einer Kameraeinheit mit den Merkmalen des Patentanspruchs 14 gelöst.

Bei dem erfindungsgemäßen Verfahren kann auch eine Vorrichtung, insbesondere für einen Heckbereich eines Fahrzeugs, die eine Kameraeinheit aufweist, die zur Bilderfassung des Außenbereichs des Fahrzeugs dient, wobei die Kameraeinheit, insbesondere in einem Gehäuse mittels eines Trägerelements, am Fahrzeug geschützt angeordnet ist, und ein bewegliches Verschlusselement zum Verschließen einer Gehäuseöffnung vorhanden ist, welches durch eine Antriebseinheit in zumindest zwei Endstellungen (I, II), nämlich eine Schließstellung (I) und eine Offenstellung (II) bewegbar ist, realisiert werden. Bei dieser Vorrichtung kann es sich auch um die zuvor beschriebene erfindungsgemäße Vorrichtung, insbesondere aus dem Anspruch 1 und den jeweiligen Unteransprüchen handeln.

Bei dem erfindungsgemäßen Verfahren ist es vorgesehen, dass ein Steuersignal in der Schließstellung (I) des Verschlusselements von einem elektrischen Schaltelement durch eine von außen wirkende Kraft auf das Verschlusselement erzeugt wird. Ebenfalls ist es denkbar, dass das Verschlusselement in seiner Schließstellung (I) bei der von außen wirkenden Kraft mechanisch mit dem elektrischen Schaltelement zusammenwirkt, um das Steuersignal zu erzeugen. Auch ist es denkbar, dass eine Relativbewegung des Verschlusselements oder der Antriebsmechanik für die Kameraeinheit optisch, magnetisch oder auf andere Art und Weise von dem elektrischen Schaltelement messtechnisch erfasst wird, um das Steuersignal zu erzeugen.

Wie bereits erwähnt, kann das erfindungsgemäße Verfahren mit der zuvor beschriebenen erfindungsgemäßen Vorrichtung durchgeführt werden. Ebenfalls kann auf der erfindungsgemäßen Vorrichtung das erfindungsgemäße Verfahren betrieben werden.

Weitere Vorteile, Merkmale und Einzelheiten der Erfindung ergeben sich aus der nachfolgenden Beschreibung, in der unter Bezugnahme auf die Zeichnungen die Erfindung dargestellt ist. Dabei können in den Ansprüchen und der Beschreibung erwähnte Merkmale für die erfindungsgemäße Vorrichtung oder das erfindungsgemäße Verfahren einzeln für sich oder in beliebiger Kombination erfindungswesentlich sein. Es zeigen:
- Figur 1: eine dreidimensionale Ansicht einer Vorrichtung in Schließstellung (I) des Verschlusselements, wobei große Teile der Vorrichtung transparent dargestellt sind,
- Figur 2: eine linke Seitenansicht der Vorrichtung aus Figur 1 mit verschiedenen Beispielen zur Anordnung des elektrischen Schaltelements,
- Figur 3: eine linke Seitenansicht der Vorrichtung aus Figur 2 in Offenstellung (II) des Verschlusselements,
- Figur 4: eine dreidimensionale Ansicht vergleichbar zu Figur 1 mit der Vorrichtung aus den Figuren 1 bis 3 in Offenstellung (II) des Verschlusselements,
- Figur 5: eine Explosionsansicht einer Vorrichtung vergleichbar zu den Figuren 1 bis 4,
- Figur 6: eine dreidimensionale Ansicht der Befestigung des Verschlusselements am Schlitten einer Vorrichtung,
- Figur 7: eine teilweise Seitenansicht der erfindungsgemäßen Vorrichtung mit einem Verschlusselement mit integriertem Schaltelement und
- Figur 8: eine teilweise Seitenansicht einer erfindungsgemäßen Vorrichtung vergleichbar zur Figur 7 mit einer weiteren Variante zur Anordnung des Schaltelements an bzw. in dem Verschlusselement.

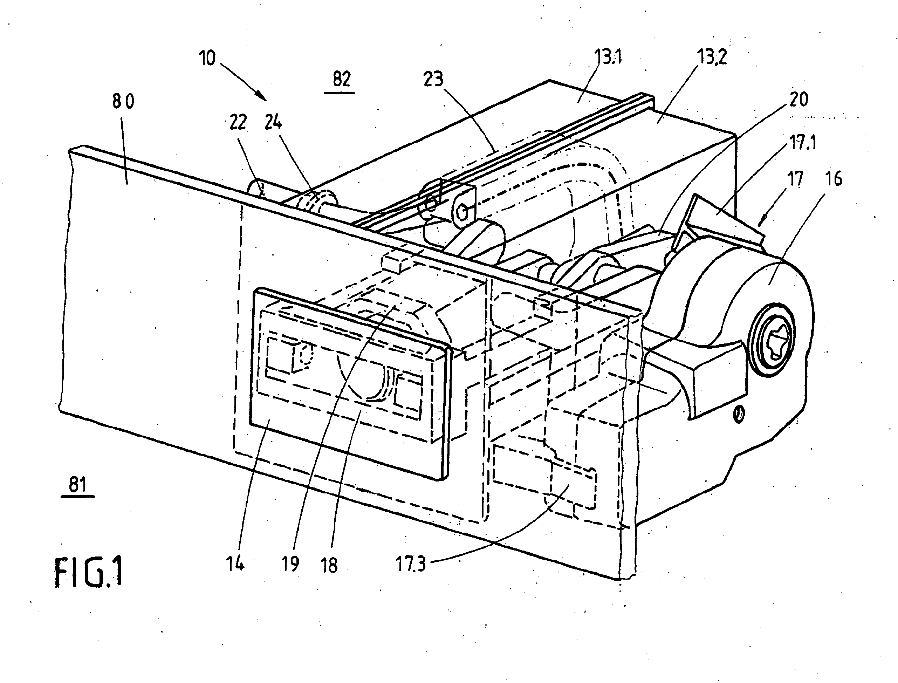

In den Figuren 1 bis 8 ist eine erfindungsgemäße Vorrichtung in verschiedenen Ausführungsbeispielen dargestellt, wobei jedoch gleiche Merkmale jeweils mit den identischen Bezugszeichen versehen sind. Die Figuren 1 bis 6 unterscheiden sich in den Ausführungsbeispielen auch nur in der unterschiedlichen Anordnung des elektrischen Schaltelements 15, das an unterschiedlichen Stellen innerhalb der Vorrichtung 10 angeordnet sein kann. Dabei wirkt das elektrische Schaltelement 15 bzw. die elektrischen Schaltelemente 15 jeweils mit der Antriebsmechanik der Vorrichtung 10 zusammen.

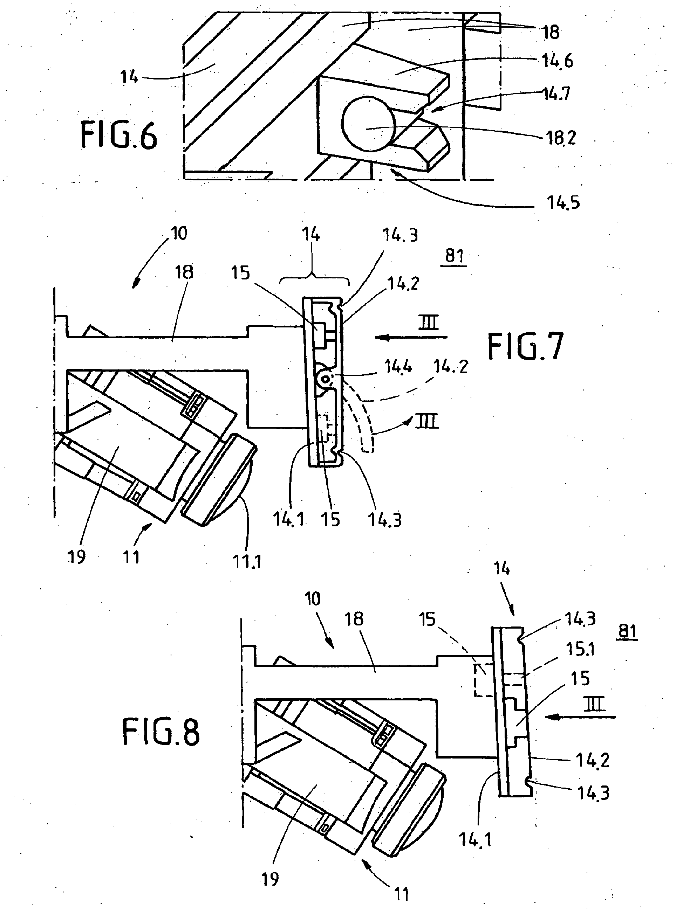

In den Figuren 7 und 8 wirkt das jeweilige elektrische Schaltelement 15 mit einem zweiteiligen Verschlusselement 14 zusammen, wobei in den Figuren 7 und 8 auch unterschiedliche Anordnungen des Schaltelements 15 zur Verdeutlichung dargestellt sind.

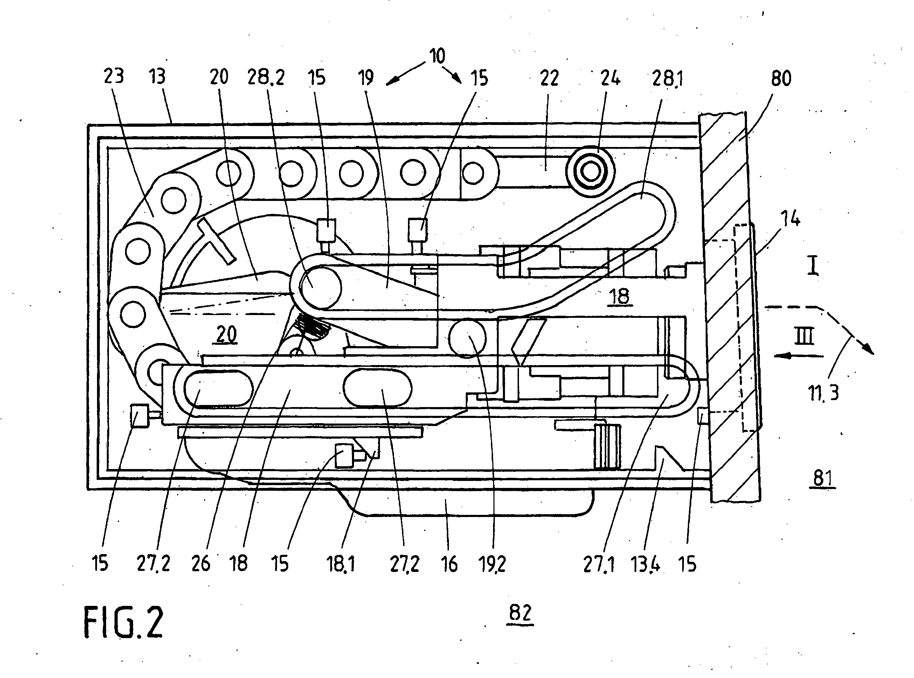

Die Figur 1 zeigt eine dreidimensionale Ansicht einer erfindungsgemäßen Vorrichtung 10, die an einem Karosserieteil 80, insbesondere einer Stoßstange eines Fahrzeugs 80 fest angeordnet ist. Innerhalb der Vorrichtung 10 ist eine Kameraeinheit 11 beweglich über einen Antriebsmechanismus angeordnet. Die Kameraeinheit 11 ist selbst in einem Gehäuse 13 geschützt untergebracht, welches über ein Trägerelement 12 mit der Vorrichtung 10 befestigt ist. Um die Kameraeinheit 11 vor Verunreinigungen in ihrer Ruheposition zu schützen, ist ein Verschlusselement 14 vorgesehen, welches die Öffnung 13.3 des Gehäuses 13 in einer Schließstellung I verschließen kann. Damit die Kameraeinheit 11 mit ihrer Linse 11.1 einen Aufnahmebereich 11.2 von einem Außenbereich des Fahrzeugs 80 erfassen kann, wird das Verschlusselement 14 in eine Offenstellung II verfahren, wodurch die Gehäuseöffnung 13.3 freigegeben wird. Gleichzeitig wird auch die Kameraeinheit 11 durch den Antriebsmechanismus aus der Vorrichtung 10 zumindest teilweise ausgefahren (s. Bewegungsrichtung 11.3 der Kameraeinheit in Fig. 2), um die Bilderfassung zu verbessern. Dabei bewegt sich die Kameraeinheit 11 zu einer Außenseite 81 des Fahrzeuges 80, wohingegen das Gehäuse 13 der Vorrichtung 10 zur Innenseite (82) gerichtet ist. Der Antriebsmechanismus weist einen Schlitten 18, einen Kipphebel 19, ein zweiteiliges Koppelelement 20 sowie eine Antriebswelle 21 auf. Zusätzlich sind an der Innenwand der Gehäuseseiten eine Linearführung 27 für den Schlitten 18 und eine Kulissenführung 28 für den Kipphebel 19 vorgesehen. Die Kameraeinheit 11 sendet ihre Bilder über eine elektrische Leitung 22 an eine fahrzeugseitige Elektronik. Um die elektrische Leitung 22 bestmöglich im Gehäuse 13 zu schützen, ist eine Kabelkette 23 vorgesehen, in der die elektrische Leitung 22 geführt ist. Die Kabelleitung 22 tritt an einem Gehäusedurchbruch aus dem Gehäuse 13 heraus, und wird dabei durch eine Kabeldichtung 24 abgedichtet. Die Kabelkette 23 beginnt an der inneren Gehäusedecke nahe der Kabeldichtung 24 und endet kurz vor der Kameraeinheit 11, wobei die Kabelkette 23 einen halbkreisförmigen Verlauf einnimmt. Die Kabelkette 23 kann auch an der Gehäusedecke befestigt sein, um die Leitung 22 bestmöglich im Gehäuse 13 zu führen. Ferner kann die Kabelkette 23 selbsttragend ausgestaltet sein.

Um nun die Kameraeinheit 11 aus ihrer Ruheposition in ihre Betriebsposition, in der eine Bildaufnahme ermöglicht ist, zu bewegen, ist eine Antriebseinheit 16 vorgesehen, die außenseitig am Gehäuse 13 angeflanscht ist. Die entsprechende Antriebseinheit 16 wird über Rastmittel an der Außenseite des Gehäuses 13 über Rastmittel 17 gehalten. Die entsprechenden Rastmittel sind in den Figuren 1, 4 und 5 gut sichtbar dargestellt. Dabei ragen die Rastmittel 17 aus der Gehäuseseite heraus, um form- und kraftschlüssig die Antriebseinheit 16 zu halten. Das vordere Rastmittel 17 ist als Clips 17.3 ausgestaltet und das hintere Rastmittel 17 weist ein bogenförmiges Verstärkungsmittel 17.1 auf, welches rippenartig ausgeformt ist. In dem Verstärkungsmittel 17.1 ist ein Durchbruch 17.2 angeordnet, der mit einem Vorsprung am Antriebseinheitgehäuse 16 formschlüssig zusammenwirkt. Die Montage der Antriebseinheit 16 kann durch eine einfache Pressbewegung auf die Gehäuseaußenseite erfolgen.

Von der Antriebseinheit 16 geht eine Antriebswelle 21 aus, die durch das zweiteilige Gehäuse 13, insbesondere das zweite Gehäuseteil 13.2 durchgeführt wird. Im Inneren des Gehäuses 13 wirkt die Antriebswelle 21 mit dem Koppelelement 20 zusammen, wobei die die Antriebswelle 21 drehfest mit dem ersten Teil des Koppelelements 20 verbunden ist. Das Koppelelement 20 besteht aus zwei Drehhebeln, die über ein Drehgelenk miteinander verbunden sind. Das zweite Teil des Koppelelements 20 ist über einen Nocken mit dem Schlitten 18 formschlüssig verbunden, wozu eine Aufnahme 18.5 im Schlitten 18 vorgesehen ist.

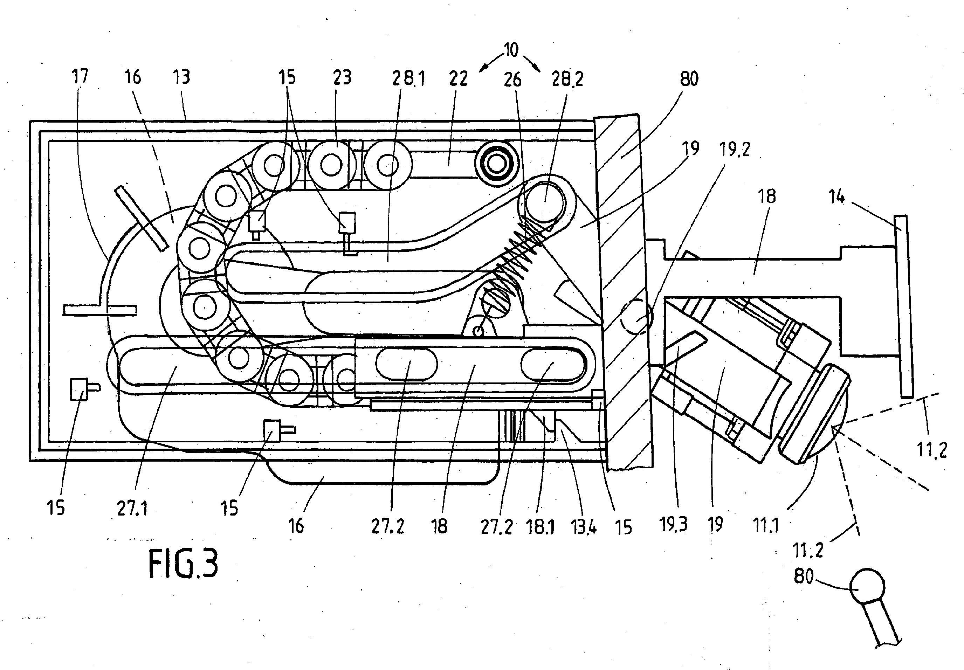

Wie gut aus den Figuren 2 und 3 zu erkennen ist, wird der Schlitten 18 über die Linearführung 27 längsverschieblich im Gehäuse 13 gelagert. Dabei wird die von der Antriebseinheit 16 eingeleitete Drehbewegung der Antriebswelle 21 über das Koppelelement 20 auf den Schlitten 18 übertragen, der ausschließlich eine Längsbewegung vollzieht. Die Linearführung 27 ist beidseitig in den Gehäuseteilen 13.1 und 13.2 als Nut 27.1 ausgebildet. In der Nut 27.1 werden Nocken 27.2 vom Schlitten 18 geführt. Die Nocken 27.2 sind selbst quaderförmig ausgestaltet, wobei die Eckkanten abgerundet sind.

Die Vorrichtung 10 ist in den Figuren 2 und 3 als Seitenansicht dargestellt, wobei das Gehäuse 13 durchsichtig dargestellt ist. Die Vorrichtung 10 in den Figuren 2 und 3 unterscheidet sich nur durch die Position der Kameraeinheit 11 bzw. die Endstellung I und II des Verschlusselements 14.

In der Figur 2 ist das Verschlusselement 14 in seiner Schließstellung I dargestellt. Hierbei ist der Schlitten 18 weitestmöglich in das Gehäuse 13 eingefahren, so dass der hintere Nocken 27.2 fast das Ende der Nut 27.1 berührt, wodurch ein Anschlag gebildet werden kann. Wie aus Figur 2 gut ersichtlich ist, liegen die beiden Hebelteile des Koppelelements 20 fast parallel zueinander, wobei jedoch das erste Koppelteil über seinen Totpunkt hinweg gedreht ist und somit eine leichte Neigung zum zweiten Koppelteil aufweist. Die entsprechenden Längsachsen sind in Figur 2 eingezeichnet, wobei erkennbar ist, dass hier ein Winkel zwischen den beiden Koppelteilen 20.1 und 20.2 vorliegt. Durch die Verdrehung des ersten Koppelteils 1 über den ersten Totpunkt kann eine mechanische Verriegelung der Antriebsmechanik, insbesondere von dem Verschlusselement 14 vorgenommen werden.

In der Figur 3 ist das Verschlusselement 14 in der Offenstellung II dargestellt. Dabei ist wiederum das erste Koppelteil 20.1 über seinen zweiten Totpunkt hinweg gedreht, so dass wieder die beiden Längsachsen des ersten und zweiten Koppelteils 20.1 und 20.2 einen leichten Winkel zueinander einnehmen. Auch in dieser Offenstellung II ist das Verschlusselement 14 dadurch mechanisch verriegelt. Eine waagerechte Kraft auf das Verschlusselement 14 führt dazu, dass das erste Koppelteil 20.1 weiter nach unten gedrückt wird, wobei diese Drehbewegung durch die selbsthemmende Antriebseinheit 16 verhindert wird.

Damit die Kameraeinheit 11 nicht nur durch den Schlitten 18 aus dem Gehäuse 13 herausgefahren wird, ist zusätzlich der Kipphebel 19 vorgesehen, der die Kamera beidseitig umgibt. Die Kameraeinheit 11 ist in der Öffnung 19.1 angeordnet, in dem die Linse 11.1 aus der Öffnung 19.1 herausragt. Der Kipphebel 19 weist einen festen Drehpunkt 19.2 zum Schlitten 18 auf, der für diesen Drehpunkt 19.2 zumindest eine Aufnahmebohrung 18.5 aufweist. Der Kipphebel 19 ist links- und rechtsseitig zwischen dem Schlitten 18 angeordnet. Der Schlitten selbst ist ebenfalls links- und rechtsseitig in dem Gehäuse 13 angeordnet, wodurch insgesamt ein Verkanten oder Verklemmen des Antriebsmechanismus sicher verhindert wird. Damit der Kipphebel 19 auch eine Drehbewegung im Schlitten 18 vollzieht, ist zusätzlich eine Kulissenführung 28 vorgesehen, die als links- und rechtsseitige Nut 28.1 in den seitlichen Gehäusewänden eingebracht ist. In diesen Nuten 28.1 laufen zwei bolzenförmige Kulissensteine 28.2, die an dem Kipphebel 19 links- und rechtsseitig angebracht sind. Zusätzlich wirkt eine Feder 26 auf den Kipphebel 19, um einen optimalen Toleranzausgleich zu ermöglichen. Die Feder 26 ist zwischen dem Hebel 18, insbesondere dem Loch 18.6, und dem linken Kulissenstein 28.2 des Kipphebels 19 angeordnet, wodurch der Kipphebel 19 zum Schlitten 18 gezogen wird.

Wie an den Figuren 2 und 3 gut erkenntlich ist, sind die Linearführung 27 und die Kulissenführung 28 zum größten Teil parallel zueinander ausgestaltet, wobei jedoch die Kulissenführung 28 im vorderen Gehäusebereich, d. h. zum Verschlusselement 14 hin, nach oben geführt wird, um somit die Kippbewegung der Kameraeinheit 11 zu realisieren.

In den Figuren 2 und 3 sind optionale Positionen für das elektrische Schaltelement 15 dargestellt. Dabei wirkt in Figur 2 ein Schaltelement 15 mit dem hinteren Ende des Schlittens 18 zusammen, um eine Kraft III (s. Betätigungspfeil) auf das Verschlusselement 14 messtechnisch erfassen zu können. Sobald diese Kraft III wirkt, wird der Schlitten 18 leicht in das Gehäuse 13 hineingedrückt, wodurch ein Steuersignal an den optionalen Schaltelementen 15 erzeugt bzw. ausgelöst wird. So ist beispielsweise am hinteren Ende des Schlittens 18 ein erstes Schaltelement 15 angeordnet. Ferner kann ein zweites Schaltelement 15 mit einem Anschlag 18.1 am Schlitten 18 zusammenwirken. Ebenfalls ist es denkbar, dass ein drittes Schaltelement 15 mit dem Schlitten 18 im Bereich der Aufnahme 18.5 zusammenwirkt. Ein viertes Schaltelement 15 kann ferner mit dem äußeren Ende des Kipphebels 19 im Bereich des Kulissensteins 28.2 mechanisch zusammenwirken. Ein fünftes optionales Schaltelement ist im vorderen Gehäusebereich 13 nahe der Gehäuseöffnung 13.3 angeordnet und kann mit einer Innenseite des Verschlusselements 14 direkt zusammenwirken. Das Verschlusselement 14 weist ein geringfügiges Spiel in seiner Schließstellung I auf, in dem z. B. ein Dichtungselement im Bereich der Gehäuseöffnung 13.3, welches mit dem Verschlusselement 14 zusammenwirkt, leicht eingedrückt wird.

Die zuvor erwähnten Schaltelemente 15 aus Figur 2 sind entsprechend in der Figur 3 beispielhaft eingezeichnet, wobei jedoch hier ein Kontakt zur Antriebsmechanik nicht gegeben ist, da sich das Verschlusselement 14 in seiner Offenstellung II befindet. Die zuvor erwähnten optionalen Schaltelemente 15 können links- und rechtsseitig im Gehäuse 13 angeordnet sein. Ebenfalls ist es denkbar, dass zumindest zwei optionale Schaltelemente 15 gleichzeitig im Gehäuse 13 vorgesehen sind. Allerdings reicht es aus, wenn auch nur ein Schaltelement 15 vorhanden ist, um somit eine Kraft III auf das Verschlusselement 14 messtechnisch in ein Steuersignal umwandeln zu können.

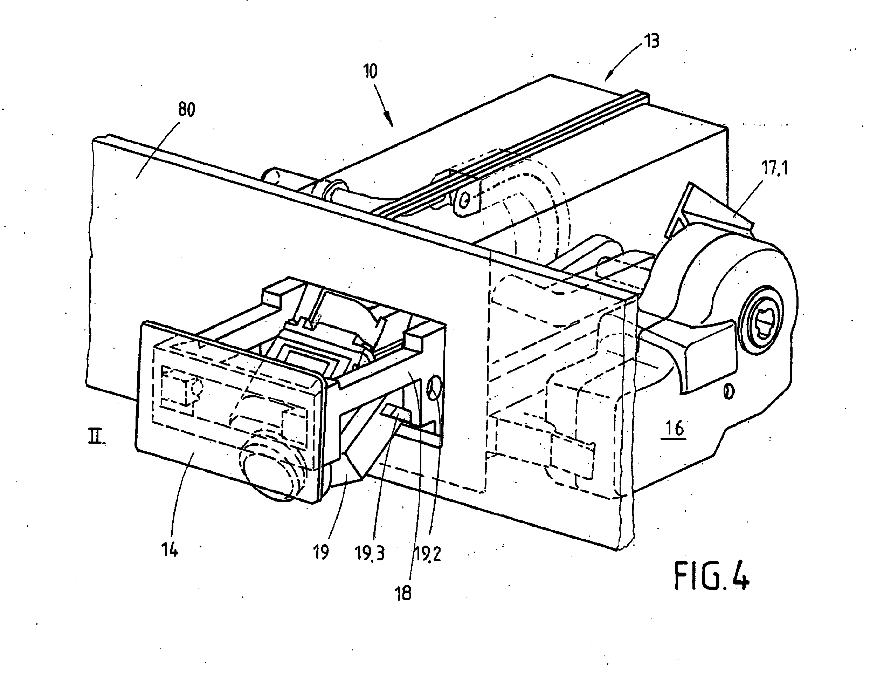

In der Figur 3 ist ferner ersichtlich, dass der Schlitten 18 mit seinem unteren Anschlag 18.1 gegen einen Anschlag 13.4 im Gehäuse 13 gefahren ist, wodurch der Schlitten 18 nicht weiter zur Gehäuseöffnung 13.3 bewegbar ist. Ferner ist auch am Kipphebel 19 ein Anschlag 19.3 vorgesehen, der dafür sorgt, dass der Kipphebel eine feste Lage zum Schlitten 18 in den beiden Kipppositionen einnimmt. In der Figur 4 wird gut das Zusammenwirken des Anschlags 19.3 vom Kipphebel 19 mit dem Schlitten 18 dargestellt. Die Figur 4 unterscheidet sich von der Figur 1 ausschließlich durch die Offenstellung 11 vom Verschlusselement 14. In den Figuren 1 und 2 ist die Vorrichtung 10 in der Schließstellung I des Verschlusselements 14 dargestellt. Hingegen ist in den Figuren 3 und 4 das Verschlusselement 14 in der Offenstellung II dargestellt. Hierbei ermöglicht die Kameraeinheit eine Bilderfassung, wobei der Aufnahmebereich 11.2 angedeutet ist. Ebenfalls wurde eine Anhängerkupplung als Karosserieteil 80 exemplarisch in Figur 3 dargestellt.

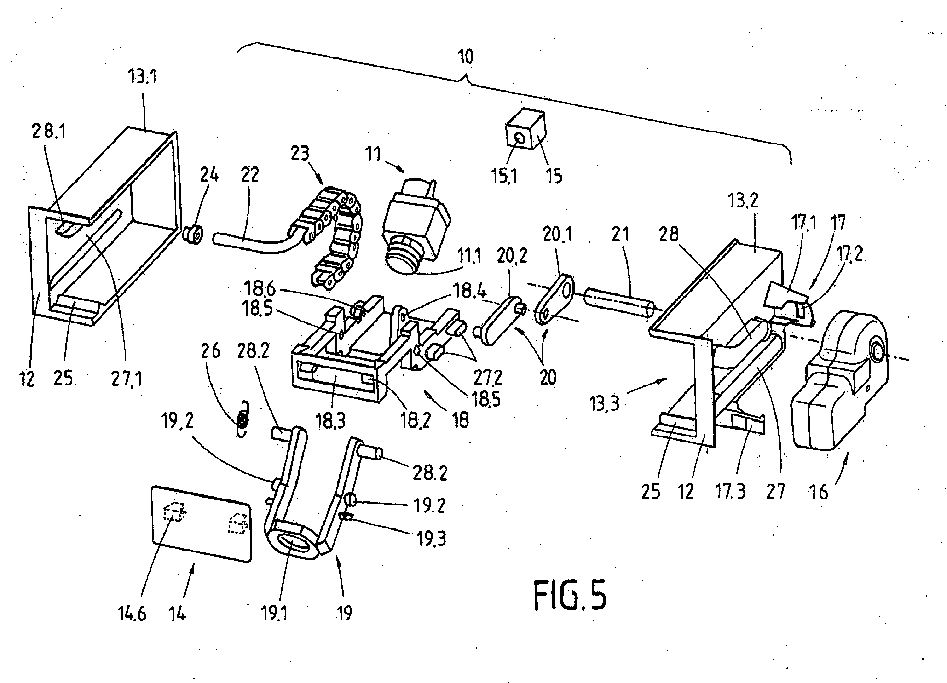

In Figur 5 ist eine Explosionsdarstellung der Vorrichtung aus den Figuren 1 bis 4 dargestellt, wobei jedoch nur exemplarisch ein Schaltelement 15 eingezeichnet worden ist. In der Figur 5 ist gut erkennbar, dass das Gehäuse 13 aus einem ersten Gehäuseteil 13.1 und einem zweiten Gehäuseteil 13.2 besteht.

In der Figur 6 ist die Rastverbindung zwischen dem Verschlussteil 14 und dem Schlitten 18 vergrößert dargestellt. Hierbei ragt von der Rückseite bzw. Innenseite des Verschlusselements 14 ein Lagerarm 14.6 in Richtung des Schlittens 18 heraus. Dieser Lagerarm weist eine Öffnung 14.7 auf, die einen komplementär ausgestalteten Lagerstift 18.2 am Schlitten 18 aufnehmen kann. Der Lagerarm 14.6 ist an seinem Ende mit einem Spalt versehen, der zur Öffnung 14.7 führt, so dass in das Verschlusselement 14 auch die Lagerstifte 18.2 vom Schlitten 18 aufgeclipst werden können. Der Spalt im Lagerarm 14.6 weist Anschrägungen auf, um den Lagerstift 18.2 leicht einführen zu können. Die in Figur 6 dargestellte Rastverbindung ist reversibel lösbar ausgestaltet. Durch die Breite des Spalts im Lagerarm 14.6 kann auch eine irreversible Rastverbindung ausgestaltet werden, die nur durch Zerstörung wieder aufhebbar ist.

In den Figuren 7 und 8 ist dargestellt, wie ein Schaltelement 15 direkt mit dem Verschlusselement 14 zusammenwirken kann. Zu diesem Zweck ist das Verschlusselement 14 in seiner Offenstellung II dargestellt, wobei jedoch das elektrische Schaltelement 15 dazu dient, ein Steuersignal in der Schließstellung des Verschlusselements 14 zu erzeugen.

In den Figuren 7 und 8 ist das Verschlusselement 14 zweiteilig aufgebaut, wobei das Basisteil 14.1 zur Abdichtung der Gehäuseöffnung 13.3 dient und mit dem Schlitten 18 verbunden ist. An dem Basisteil 14.1 ist z. B. über eine Membrane 14.3 das Betätigungsteil 14.2 leicht bewegbar angeordnet. Eine Kraft III auf das Betätigungsteil 14.2 führt zu einer Relativbewegung zwischen dem Basisteil 14.1 und dem Betätigungsteil 14.2. Das zwischen dem Basisteil 14.1 und dem Betätigungsteil 14.2 angeordnete Schaltelement 15 kann somit diese Relativbewegung des Betätigungsteils 14.2 an der Innenseite leicht messtechnisch erfassen und zu einem Steuersignal umwandeln. Wie aus Figur 8 weiter zu erkennen ist, ist auch ein gestricheltes optionales Schaltelement 15 dargestellt, welches am Schlitten 18 oder einer Innenwand des Verschlusselements 14 angeordnet ist, um die Kraft III messtechnisch zu erfassen. Zu diesem Zweck ragt ein Stößel 15.1 von dem gestrichelt dargestellten Schaltelement 15 durch das Verschlusselement 14 und wirkt mechanisch mit der Innenseite des Betätigungsteils 14.2 zusammen. Hierdurch kann ebenfalls leicht die Kraft III auf das Betätigungsteil 14.2 messtechnisch vom Schaltelement 15 erfasst werden. Optional kann das gestrichelte dargestellte Schaltelement 15 auch an dem Gehäuse 13 vorgesehen sein, wobei jedoch dann tatsächlich nur in der Schließstellung I eine Kraft III auf das Verschlusselement 14, insbesondere das Betätigungsteil 14.2, messtechnisch erfassbar ist. In diesem Falle wäre das gestrichelte Schaltelement 15 aus Figur 8 ähnlich zu dem fünften Schaltelement aus den Figuren 2 und 3 angeordnet.

In der Figur 7 ist ebenfalls ein zweiteiliges Verschlusselement 14 dargestellt, wobei jedoch das Betätigungsteil 14.2 über ein Verbindungsteil 14.4 mechanisch mit dem Basisteil 14.1 beweglich verbunden ist. Das Verbindungsteil14.4 kann als Dreh- oder Kippgelenk ausgestaltet sein. Zusätzlich kann zwischen dem Basisteil 14.1 und dem Betätigungsteil 14.2 eine Membrane zur Abdichtung vorgesehen sein. Je nachdem ob das Schaltelement 15 oberhalb oder unterhalb (Schaltelement 15 ist nur gestrichelt dargestellt) des Verbindungsteils 14.4 angeordnet ist, kann eine Druck- oder Zugkraft III (oben Druckkraft, unten Zugkraft) von dem jeweiligen Schaltelement 15 erfasst werden. Auch ist es denkbar, dass das Betätigungsteil 14.2 einen hakenförmigen Vorsprung aufweist (s. gestrichelte Darstellung), wodurch eine Ziehbewegung am Verschlusselement 14 leicht für einen Bediener erzeugbar ist.

Abschließend sei noch einmal erwähnt, dass das Verschlusselement 14 aus den Figuren 1 bis 8 somit auch als Bedienelement für eine Betätigung eines Heckklappenschlosses oder dergleichen dienen kann. Zusätzlich kann aber auch durch die erfasste Kraft III auf das Verschlusselement 14 in der Schließstellung I eine Öffnung der Vorrichtung 10 erfolgen, um z. B. die Kameraeinheit 11 in eine Reinigungsposition zu fahren. Hierzu kann zusätzlich ein Freigabesignal erforderlich sein, welches im Fahrzeuginneren durch einen Freigabeschalter erzeugbar ist. Insgesamt gesehen lässt sich somit der Anwendungsbereich der vorliegenden Vorrichtung 10 deutlich erweitern, ohne jedoch den Bauraum der Vorrichtung 10 im Fahrzeug 80 zu vergrößern.

### Bezugszeichenliste

- 10: Vorrichtung
- 11: Kameraeinheit
- 11.1: Linse
- 11.2: Aufnahmebereich
- 11.3: Bewegungsrichtung
- 12: Trägerelement
- 13: Gehäuse
- 13.1: erstes Gehäuseteil
- 13.2: zweites Gehäuseteil
- 13.3: Gehäuseöffnung
- 13.4: Anschlag für 18
- 13.5: Durchbruch für 22
- 14: Verschlusselement
- 14.1: Basisteil
- 14.2: Betätigungsteil
- 14.3: Membrane
- 14.4: Verbindungsteil
- 14.5: Rastverbindungsteil für 18
- 14.6: Lagerarm
- 14.7: Öffnung
- 15: Elektrisches Schaltelement
- 15.1: Stößel
- 16: Antriebseinheit
- 17: Rastmittel
- 17.1: Verstärkungsmittel, Rippe
- 17.2: Durchbruch
- 17.3: Clips
- 18: Schlitten
- 18.1: Anschlag für 13
- 18.2: Lagerstift für 14
- 18.3: Öffnung
- 18.4: Aufnahme für 20
- 18.5: Aufnahme für 19
- 18.6: Loch für 26
- 19: Kipphebel
- 19.1: Öffnung für 11
- 19.2: Drehpunkt/Drehachse
- 19.3: Anschlag für 18
- 20: Koppelelement
- 20.1: erstes Koppelteil
- 20.2: zweites Koppelteil
- 21: Antriebswelle
- 22: Elektrische Leitung
- 23: Kabel kette
- 24: Kabeldichtung
- 25: Dichtung
- 26: Feder
- 27: Linearführung
- 27.1: Nut
- 27.2: Nocken
- 28: Kulissenführung
- 28.1: Nut
- 28.2: Kulissenstein

- 80: Teil (Karosserie-) eines Fahrzeuges, insbesondere Stoßstange, Schweller oder Heckklappe
- 81: Außenseite
- 82: Innenseite

- I: Schließstellung
- II: Offenstellung
- III: Pfeil für Betätigungskraft

## Patentansprüche

1. Vorrichtung (10), insbesondere für einen Heckbereich eines Fahrzeuges (80), mit einer Kameraeinheit (11), die zur Bilderfassung des Außenbereiches des Fahrzeuges (80) dient, wobei
die Kameraeinheit (11), insbesondere in einem Gehäuse (13) mittels eines Trägerelements (12), am Fahrzeug (80) geschützt angeordnet ist, und
ein bewegliches Verschlusselement (14) zum Verschließen einer Gehäuseöffnung (13.3) vorhanden ist, welches durch eine Antriebseinheit (16) in zumindest zwei Endstellungen (I, II), nämlich eine Schließstellung (I) und eine Offenstellung (II), bewegbar ist, und das Verschlusselement (14) gleichzeitig dazu dient, ein elektrisches Schaltelement (15) zu betätigen, wobei das elektrische Schaltelement (15) in der Schließstellung (I) des Verschlusselementes (14) eine von außen wirkende Kraft messtechnisch als Steuersignal erfasst, **dadurch gekennzeichnet, dass** das Verschlusselement (14) zumindest teilweise doppelwandig ausgestaltet ist, wobei das Schaltelement (15) zwischen den beiden Wänden des doppelwandigen Verschlusselementes (14) angeordnet ist.

2. Vorrichtung (10) nach Anspruch 1,
**dadurch gekennzeichnet,**
**dass** das Verschlusselement (14) gleichzeitig dazu dient ein elektrisches Schaltelement (15) zu betätigen, um ein fahrzeuginternes Steuersignal zu erzeugen und/oder dass das Verschlusselement (14) gleichzeitig ein Betätigungselement (14) für eine Betätigung eines Heckklappenschlosses oder dergleichen ist.

3. Vorrichtung (10) nach einem der vorhergehenden Ansprüche,
**dadurch gekennzeichnet,**
**dass** die Gehäuseöffnung (13.3) zumindest für die Kameraeinheit (11) zur Bilderfassung des Außenbereiches eines Fahrzeuges (80) dient, wobei insbesondere ein geneigter Bilderfassungsbereich (11.2) für die Kameraeinheit (11) vorgesehen ist.

4. Vorrichtung (10) nach einem der vorhergehenden Ansprüche,
**dadurch gekennzeichnet,**
**dass** die Kameraeinheit (11) bewegbar an einem Schlitten (18) an dem Trägerelement (12), insbesondere in dem Gehäuse (13), angeordnet ist, wobei insbesondere der Schlitten (18) über eine Linearführung (27) am Trägerelement (12) gelagert ist.

5. Vorrichtung (10) nach Anspruch 4,
**dadurch gekennzeichnet,**
**dass** die Kameraeinheit (11) über ein Kippelement (19) am Schlitten (18) gelagert ist, wobei insbesondere die Kippbewegung des Kippelements (19) durch eine Kulissenführung (28) erreichbar ist, und/oder
wobei insbesondere das Kippelement (19) eine feste Drehachse (19.2) zum Schlitten (18) aufweist, und wobei insbesondere die Kulissenführung (28) für das Kippelement (19) oberhalb und zumindest teilweise parallel zur Linearführung (27) des Schlittens (18) angeordnet ist.

6. Vorrichtung (10) nach einem der Ansprüche 4 oder 5,
**dadurch gekennzeichnet,**
**dass** das Verschlusselement (14) für die Kameraeinheit (11) am Schlitten (18) befestigt ist, wobei insbesondere eine Rastverbindung (14.5, 18.2) vorgesehen ist und/oder dass das Verschlusselement (14) in den Endstellungen (I, II) mechanisch verriegelt ist, um ein unrechtmäßiges Öffnen zu verhindern.

7. Vorrichtung (10) nach einem der vorhergehenden Ansprüche,
**dadurch gekennzeichnet,**
**dass** die Antriebseinheit (16) außen am Gehäuse (13) der Kameraeinheit (11) angeordnet ist,
wobei insbesondere die Antriebseinheit (16) über Rastmittel (17) mit einer Gehäuseaußenwand verbunden ist, und
wobei insbesondere nur eine Antriebswelle (21) von der Antriebseinheit (16) in das Gehäuse (13) zum Antrieb der Kameraeinheit (11) durchgeführt ist.

8. Vorrichtung (10) nach einem der Ansprüche 4 bis 7,
**dadurch gekennzeichnet,**
**dass** ein Koppelelement (20) zwischen der Antriebswelle (21) und dem Schlitten (18) angeordnet ist, die eine mechanische Verrieglung des Verschlusselementes (14) in den Endstellungen (I, II) realisiert,
wobei insbesondere das Koppelelement (20) in den Endstellungen (I, II) des Verschlusselementes jeweils etwas über seine Totpunkte hinaus bewegt ist.

9. Vorrichtung (10) nach einem der vorhergehenden Ansprüche,
**dadurch gekennzeichnet,**
**dass** die Kameraeinheit (11) und/oder eine Elektronik der Vorrichtung mit einer elektrischen Leitung (22) verbunden ist, die zur elektrischen Anbindung an eine Fahrzeugelektronik dient,
wobei insbesondere die Leitung (22) zumindest im Gehäuse (13) der Kameraeinheit (11) innerhalb einer Kabelkette (23) geführt ist.

10. Vorrichtung (10) nach einem der vorhergehenden Ansprüche,
**dadurch gekennzeichnet,**
**dass** das elektrische Schaltelement (15) in der Schließstellung (I) des Verschlusselementes (14) eine von außen wirkende Kraft (III) auf das Verschlusselement (14) messtechnisch als Steuersignal erfasst und/oder dass das Steuersignal des elektrischen Schaltelements (15) dazu dient, die Kameraeinheit (11) in die Offenstellung (II) zu überführen,
wobei insbesondere zusätzlich ein Freigabesignal vorliegt.

11. Vorrichtung (10) nach einem der vorhergehenden Ansprüche,
**dadurch gekennzeichnet,**
**dass** das elektrische Schaltelement (15) eine Relativbewegung zwischen den beiden Wänden des Verschlusselementes (14) durch eine von außen wirkende Kraft (III) auf das Verschlusselement (14) messtechnisch als Steuersignal erfasst.

12. Vorrichtung (10) nach einem der vorhergehenden Ansprüche,
**dadurch gekennzeichnet,**
**dass** das Verschlusselement (14), welches als Betätigungselement (14) dient, zweiteilig aufgebaut ist und ein Betätigungsteil (14.2) und ein Basisteil (14.2) aufweist,
wobei insbesondere das Basisteil (14.1) die Gehäuseöffnung (13.3) in der Schließstellung (I) abdichtend verschließt und das Betätigungsteil (14.2) zur Betätigung des elektrischen Schaltelements (15) dient.

13. Vorrichtung (10) nach einem der vorhergehenden Ansprüche,
**dadurch gekennzeichnet,**
**dass** das Schaltelement (15) in der Schließstellung (I) des Verschlusselementes (14) mit der Antriebsmechanik, insbesondere dem Schlitten (18), dem Kippelement (19), dem Koppelelement (20) und/oder der Antriebswelle (21), für die Kameraeinheit (11) mechanisch zusammenwirkt,
wobei insbesondere ein mechanisches Spiel zwischen dem Verschlusselement (14) in der Schließstellung (I) und einer Dichtung (25) an der Gehäuseöffnung (13.3) vorgesehen ist.

14. Verfahren zum Betrieb einer Vorrichtung (10) nach einem der vorhergehenden Ansprüche, insbesondere für einen Heckbereich eines Fahrzeuges (80),
die eine Kameraeinheit (11) aufweist, die zur Bilderfassung des Außenbereiches des Fahrzeuges (80) dient, wobei
die Kameraeinheit (11), insbesondere in einem Gehäuse (13) mittels eines Trägerelements (12), am Fahrzeug (80) geschützt angeordnet ist, und
ein bewegliches Verschlusselement (14) zum Verschließen einer Gehäuseöffnung (13.3) vorhanden ist, welches durch eine Antriebseinheit (16) in zumindest zwei Endstellungen (I, II), nämlich eine Schließstellung (I) und eine Offenstellung (II), bewegbar ist,
wobei ein Steuersignal in der Schließstellung (I) des Verschlusselementes (14) von einem elektrischen Schaltelement (15) durch eine von außen wirkende Kraft auf das Verschlusselement (14) erzeugt wird.

15. Verfahren nach Anspruch 14,
**dadurch gekennzeichnet,**
**dass** das Verschlusselement (14) in seiner Schließstellung (I) bei der von außen wirkenden Kraft (III) mechanisch mit dem elektrischen Schaltelement (15) zusammenwirkt, um das Steuersignal zu erzeugen.

## Claims

1. A device (10), in particular for a rear area of a vehicle (80) with a camera unit (11) used for image capturing of the outside area of the vehicle (80),
wherein the camera unit (11) is arranged, in particular in a housing (13), in a protective manner on the vehicle (80) by means of a carrier element (12)
and a movable closure element (14) for closing a housing opening (13.3) is present, which is movable by a drive unit (16) in at least two end positions (I, II), i.e. a closed position (I) and an open position (II), and the closure element (14) simultaneously serves to actuate an electric switching element (15), wherein the electric switching element (15), in the closed position (I) of the closure element (14), metrologically records a force working from the outside as a control signal,
**characterised in that**
the closure element (14) is of double-wall construction, at least partially, wherein the switching element (15) is arranged between the two walls of the double-wall closure element (14).

2. The device (10) according to claim 1,
**characterised in that**
the closure element (14) simultaneously serves to actuate an electric switching element (15), in order to generate an in-vehicle control signal and/or **in that** the closure element (14) simultaneously is an actuating element (14) for actuating a tailgate lock or similar.

3. The device (10) according to one of the preceding claims,
**characterised in that**
the housing opening (13.3) is used at least for the camera unit (11) to take pictures of the outside area of a vehicle (80), wherein in particular an inclined image capture area (11.2) is provided for the camera unit (11).

4. The device (10) according to one of the preceding claims,
**characterised in that**
the camera unit (11) is movably arranged on a carriage (18) on the carrier element (12), in particular in the housing (13), wherein in particular the carriage (18) is mounted on the carrier element (12) via a linear guide (27).

5. The device (10) according to claim 4,
**characterised in that**
the camera unit (11) is mounted on the carriage (18) via a tilting element (19), wherein in particular the tilting movement of the tilting element (19) can be realised via a sliding guide (28), and/or
wherein in particular the tilting element (19) comprises a fixed rotary axis (19.2) to the carriage (18), and wherein in particular the sliding guide (28) for the tilting element (19) is arranged above, and at least partially in parallel to, the linear guide (27) of the carriage (18).

6. The device (10) according to one of claims 4 or 5,
**characterised in that**
the closure element (14) for the camera unit (11) is attached to the carriage (18), wherein in particular a snap-lock connection (14.5, 18.2) is provided and/or **in that** the closure element (14) is mechanically locked in the end positions (I, II) in order to avoid unlawful opening.

7. The device (10) according to one of the preceding claims,
**characterised in that**
the drive unit (16) is arranged on the outside of the housing (13) of the camera unit (11), wherein in particular the drive unit (16) is connected with a housing external wall via snap-in means (17), and
wherein in particular only one drive shaft (21) is passed from the drive unit (16) into the housing (13) for driving the camera unit (11).

8. The device (10) according to one of claims 4 to 7,
**characterised in that**
a coupling element (20) is arranged between the drive shaft (21) and the carriage (18), by means of which a mechanical lock of the closure element (14) is realised in the end positions (I, II),
wherein in particular the coupling element (20), in the end positions (I, II) of the closure element (14), is moved respectively to some extent beyond its dead centres.

9. The device (10) according to claim 1,
**characterised in that**
the camera unit (11) and/or an electronics of the device is connected with an electric line (22) which serves as an electrical connection to a vehicle electronics,
wherein in particular the line (22) is run within a cable chain (23), at least inside the housing (13) of the camera unit (11).

10. The device (10) according to one of the preceding claims,
**characterised in that**
the electric switching element (15), in the closed position of the closure element (14), records a force (III) acting from the outside upon the closure element (14) as a control signal, and/or **in that** the control signal of the electric switching element (15) serves to move the camera unit (11) into the open position (II),
wherein in particular an additional release signal is present.

11. The device (10) according to one of the preceding claims,
**characterised in that**
the electric switching element (15) metrologically records, as a control signal, a relative movement between the two walls of the closure element (14) based on a force (III) acting from the outside upon the closure element (14).

12. The device (10) according to one of the preceding claims,
**characterised in that**
the closure element (14) which serves as an actuating element (14) is constructed in two parts comprising an actuating part (14.2) and a base part (14.1),
wherein in particular the base part (14.1) sealingly closes the housing opening (13.3) in the closed position (I) and the actuating part (14.2) serves to actuate the electric switching element (15).

13. The device (10) according to one of the preceding claims,
**characterised in that**
the switching element (15), in the closed position (I) of the closure element (14), mechanically cooperates with the drive mechanism, in particular the carriage (18), the tilting element (19), the coupling element (20) and/or the drive shaft (21) for the camera unit (11),
wherein in particular mechanical play is provided between the closure element (14) in the closed position (I) and a seal (25) at the housing opening (13.3).

14. A method for operating a device (10) according to one of the preceding claims, in particular for a rear area of a vehicle (80),
the device comprising a camera unit (11) serving to take pictures of the outside area of the vehicle (80), wherein
the camera unit (11) is arranged, in particular in a housing (13) in a protective manner on the vehicle (80) by means of a carrier element (12) and
a movable closure element (14) for closing a housing opening (13.3) is present, which is movable by a drive unit (16) in at least two end positions (I, II), i..e. a closed position (I) and an open position (II),
wherein a control signal is generated in the closed position (I) of the closure element (14) by an electric switching element (15) based on a force acting from the outside upon the closure element (14).

15. The method according to claim 14,
**characterised in that**
the closure element (14), in its closed position (I), given the force (III) working from the outside, mechanically cooperates with the electric switching element (15), in order to produce the control signal.

## Revendications

1. Dispositif (10), en particulier pour une partie arrière d'un véhicule (80), comportant une unité de caméra (11) qui sert à l'acquisition d'images de la zone extérieure du véhicule (80),
l'unité de caméra (11) étant disposée de manière protégée sur le véhicule (80), en particulier dans un boîtier (13) au moyen d'un élément de support (12), et
un élément de fermeture mobile (14) étant prévu pour fermer une ouverture de boîtier (13.3), lequel peut être déplacé par une unité d'entraînement (16) dans au moins deux positions finales (I, II), à savoir une position de fermeture (I) et une position d'ouverture (II), et l'élément de fermeture (14) servant en même temps à actionner un élément de commutation électrique (15), lequel élément de commutation électrique (15) détecte, dans la position de fermeture (I) de l'élément de fermeture (14), par une technique de mesure, une force agissant de l'extérieur en tant que signal de commande,
**caractérisé en ce**
**que** l'élément de fermeture (14) est réalisé au moins en partie avec une double paroi, l'élément de commutation électrique (15) étant disposé entre les deux parois de l'élément de fermeture (14) à double paroi.

2. Dispositif (10) selon la revendication 1,
**caractérisé en ce**
**que** l'élément de fermeture (14) sert en même temps à actionner un élément de commutation électrique (15) pour générer un signal de commande interne au véhicule et/ou que l'élément de fermeture (14) est en même temps un élément d'actionnement (14) pour un actionnement d'une serrure de hayon arrière ou analogue.

3. Dispositif (10) selon l'une des revendications précédentes,
**caractérisé en ce**
**que** l'ouverture de boîtier (13.3) au moins pour l'unité de caméra (11) sert à l'acquisition d'images de la zone extérieure d'un véhicule (80), une zone d'acquisition d'images inclinée (11.2) étant en particulier prévue pour l'unité de caméra (11).

4. Dispositif (10) selon l'une des revendications précédentes,
**caractérisé en ce**
**que** l'unité de caméra (11) est disposée mobile sur un chariot (18) sur l'élément de support (12), en particulier dans le boîtier (13), le chariot (18) étant en particulier monté sur élément de support (12) par l'intermédiaire d'un guide linéaire (27).

5. Dispositif (10) selon la revendication 4,
**caractérisé en ce**
**que** l'unité de caméra (11) est montée sur le chariot (18) par l'intermédiaire d'un élément basculant (19), le mouvement de basculement de l'élément basculant (19) étant en particulier réalisable par un guide à coulisse (28), et/ou
l'élément basculant (19) présentant en particulier un axe de rotation fixe (19.2) par rapport au chariot (18) et le guide à coulisse (28) pour l'élément basculant (19) étant en particulier disposé au-dessus et au moins en partie parallèlement au guide linéaire (27) du chariot (18).

6. Dispositif (10) selon l'une des revendications 4 ou 5,
**caractérisé en ce**
**que** l'élément de fermeture (14) pour l'unité de caméra (11) est fixé au chariot (18), une liaison par encliquetage (14.5, 18.2) étant en particulier prévue et/ou que l'élément de fermeture (14) est verrouillé mécaniquement dans les positions finales (I, II) pour empêcher une ouverture illégitime.

7. Dispositif (10) selon l'une des revendications précédentes,
**caractérisé en ce**
**que** l'unité d'entraînement (16) est disposée extérieurement sur le boîtier (13) de l'unité de caméra (11),
l'unité d'entraînement (16) étant en particulier reliée à une paroi extérieure du boîtier par des moyens d'encliquetage (17), et
en particulier seulement un arbre d'entraînement (21) étant passé de l'unité d'entraînement (16) dans le boîtier (13) pour l'entraînement de l'unité de caméra (11).

8. Dispositif (10) selon l'une des revendications 4 à 7,
**caractérisé en ce**
**qu'**un élément de couplage (20) est disposé entre l'arbre d'entraînement (21) et le chariot (18), lequel réalise un verrouillage mécanique de l'élément de fermeture (14) dans les positions finales (I, II),
l'élément de couplage (20) étant en particulier déplacé chaque fois un peu au-delà de ses points morts dans les positions finales (I, II) de l'élément de fermeture.

9. Dispositif (10) selon l'une des revendications précédentes,
**caractérisé en ce**
**que** l'unité de caméra (11) et/ou une électronique du dispositif sont reliées à une ligne électrique (22) qui sert à la connexion électrique à une électronique de véhicule,
la ligne (22) étant en particulier guidée à l'intérieur d'une chaîne porte-câbles (23) au moins dans le boîtier (13) de l'unité de caméra (11).

10. Dispositif (10) selon l'une des revendications précédentes,
**caractérisé en ce**
**que** dans la position de fermeture (I) de l'élément de fermeture (14), l'élément de commutation électrique (15) détecte, par une technique de mesure, une force (III) agissant de l'extérieur sur l'élément de fermeture (14) en tant que signal de commande et/ou que le signal de commande de l'élément de commutation électrique (15) sert à faire passer l'unité de caméra (11) dans la position d'ouverture (II),
un signal de validation étant en particulier présent en plus.

11. Dispositif (10) selon l'une des revendications précédentes,
**caractérisé en ce**
**que** l'élément de commutation électrique (15) détecte, par une technique de mesure, un mouvement relatif entre les deux parois de l'élément de fermeture (14) dû à une force (III) agissant de l'extérieur sur l'élément de fermeture (14) en tant que signal de commande.

12. Dispositif (10) selon l'une des revendications précédentes,
**caractérisé en ce**
**que** l'élément de fermeture (14) qui sert d'élément d'actionnement (14) est réalisé en deux parties et présente une partie d'actionnement (14.2) et une partie de base (14.2), en particulier la partie de base (14.1) fermant hermétiquement l'ouverture de boîtier (13.3) dans la position de fermeture (I) et la partie d'actionnement (14.2) servant à actionner l'élément de commutation électrique (15).

13. Dispositif (10) selon l'une des revendications précédentes,
**caractérisé en ce**
**que** dans la position de fermeture (I) de l'élément de fermeture (14), l'élément de commutation (15) coopère mécaniquement avec le mécanisme d'entraînement, en particulier le chariot (18), l'élément basculant (19), l'élément de couplage (20) et/ou l'arbre d'entraînement (21) pour l'unité de caméra (11),
un jeu mécanique étant en particulier prévu entre l'élément de fermeture (14) dans la position de fermeture (I) et un joint d'étanchéité (25) sur l'ouverture de boîtier (13.3).

14. Procédé pour faire fonctionner un dispositif (10) selon l'une des revendications précédentes, en particulier pour une partie arrière d'un véhicule (80),
qui comporte une unité de caméra (11) qui sert à l'acquisition d'images de la zone extérieure du véhicule (80),
l'unité de caméra (11) étant disposée de manière protégée sur le véhicule (80), en particulier dans un boîtier (13) au moyen d'un élément de support (12), et
un élément de fermeture mobile (14) étant prévu pour fermer une ouverture de boîtier (13.3), lequel peut être déplacé par une unité d'entraînement (16) dans au moins deux positions finales (I, II), à savoir une position de fermeture (I) et une position d'ouverture (II),
un signal de commande étant généré dans la position de fermeture (I) de l'élément de fermeture (14) par un élément de commutation électrique (15) sous l'effet d'une force agissant de l'extérieur sur l'élément de fermeture (14).

15. Procédé selon la revendication 14,
**caractérisé en ce**
**que** dans sa position de fermeture (I), l'élément de fermeture (14) coopère mécaniquement avec l'élément de commutation électrique (15) pour générer le signal de commande en présence de la force (III) agissant de l'extérieur.
